# EUROPÄISCHE PATENTANMELDUNG

(11) **EP 0 676 734 A1**
(43) Veröffentlichungstag der Anmeldung: **11.10.1995**
(21) Anmeldenummer: 95200846.4
(22) Anmeldetag: 04.04.1995
(51) Int. Cl.: G08B 27/00, H04M 11/04

(54) **Alarmierungsanlage und Verfahren zur Alarmierung**

(30) Priorität: 08.04.1994 CH 1045/94
(71) Anmelder: Alcatel STR AG, CH-8055 Zürich (CH)
(72) Erfinder: Scheck, Romeo, CH-6330 Cham (CH)

(57) **Zusammenfassung**

Die Alarmierung einer Vielzahl von Meldungsempfängern benützt das öffentliche Fernsprechnetz (20) mit Ausbaustufe 7 und herkömmliche Endgeräte (6, ..., 9). Ein Anrufprozessor (3) nimmt vom Rechner (1) in der Kommandoausgabestelle (10) die Anweisung entgegen, welches Endgerät (6, ..., 9) unter welchen Bedingungen anzurufen und welche Meldung dort abzusetzen ist. Er baut die Anrufe selbständig auf - falls nötig macht er mehrere Versuche - setzt die Meldung ab und bricht die Verbindung ab. Er gibt dem Rechner (1) einen Rappport über die Abwicklung zurück. In einer bevorzugten Ausführungsform verlangt der Anrufprozessor (3) Quittiermeldungen von den Meldungsempfängern und richtet die Abwicklung nach diesen Meldungen aus. Der Rechner (1) kann die Vorgaben nach Auswertung der Rapporte anpassen.

## Beschreibung

Die Erfindung liegt auf dem Gebiet der Führungssysteme und betrifft eine Alarmierungsanlage und ein Verfahren zur Alarmierung einer Vielzahl örtlich gestreuter Meldungsempfänger.

Die Alarmierung bestimmter Personen bei Eintreten eines besonderen Ereignisses wie Naturkatastrophe, Feuer, Unfall, Folge kriegerischer Handlungen usw. hat lange Tradition. Hierfür wurden auch immer wieder angemessene technische Lösungen entwickelt und eingesetzt, vom Läuten der Sturmglocke bis zum Telephonalarm. Für die Alarmierung professioneller Einsatztruppen, wie etwa die ständig einsatzbereite Polizei bei einem Notruf, werden üblicherweise eigenständige Anlagen verwendet, zum Beispiel ein Betriebsfunknetz. Fur eine Grosszahl möglicher Meldungsempfänger, die nur relativ selten zum Einsatz kommen, wie zum Beispiel für die Angehörigen der Milizfeuerwehr, kommt eine solche Anlage als viel zu aufwendig und zu teuer kaum in Frage.

Stand der Technik für die Alarmierung einer Vielzahl örtlich gestreuter Meldungsempfänger sind Systeme der Mobilisation über das Telephonnetz (SMT). Hierbei werden von einer Kommandoausgabestellte aus die Teilnehmerstationen der Meldungsempfänger angerufen und laufend eine Meldung durchgegeben, die der Empfänger abhören kann, sobald er abhebt. Die Kommandoausgabestelle kann zwar registrieren, ob eine Verbindung zu Stande gekommen ist, jedoch nicht ob der gewünschte Emfpänger abgehoben hat oder ob er die Meldung verstanden hat, und schon gar nicht, ob er in der Lage ist, der Meldung Folge zu leisten. Um sicherzustellen, dass ein Anruf prioritär über das Netz und an die Teilnehmerstation geht, werden üblicherweise in den Anschlusszentralen separate Mietleitungen verbunden mit einemUmschalter verwendet. Letzterer unterbricht im Falle eines Alarms eine bestehende Verbindung zu Gunsten des Melderufs. Die notwendige Installation ist relativ aufwendig und kann trotzdem nicht sicherstellen, dass der richtige Empfänger die Meldung entgegennimmt. Wünschbar wäre, in gewissen Situationen je nach Empfänger verschiedene Meldungen absetzen zu können, zum Beispiel Spezifika für die Fachleute bei einem Giftunfall, die die Ordnungstruppen nicht zu kennen brauchen.

Es besteht daher das Problem, eine Alarmierung anzugeben, die eine Vielzahl örtlich gestreuter Meldungsempfänger innert nützlicher Frist individuell erreichen und individuelle Meldungen absetzen kann, ohne dafür einen grossen Installationsaufwand betreiben zu müssen.

Die Aufgabe wird durch eine Alarmierungsanlage gemäss Patentanspruch 1 und ein Verfahren zur Alarmierung gemäss Patentanspruch 5 gelöst.

Die Alarmierungsanlage benützt das öffentliche Fernsprechnetz als Uebertragungseinrichtung von der Kommandoausgabestelle zu den Kommandoempfängsgeräten, die bei den Meldungsempfängern stationiert sind, ohne dass bei diesen besondere Einrichtungen nötig wären. Als Kommandoempfangsgeräte dienen die herkömmlichen Teilnehmerendgeräte. Zwischen der Kommandoausgabestelle und dem Netz hingegen sorgt ein Anrufprozessor für die individuelle Abwicklung aller Anrufe. Er nimmt von einem Rechner in der Kommandoausgabestelle die Anweisung entgegen, welches Endgerät unter welchen Bedingungen anzurufen und welche Meldung dort abzusetzen ist. Er baut die Anrufe selbständig auf - falls nötig macht er mehrere Versuche - setzt die Meldung ab und bricht die Verbindung ab. Er gibt dem Rechner einen Rappport über die Abwicklung zurück.

Die Anlage benützt die Möglichkeit der Prioritätslenkung für Verbindungen in der Ausbaustufe 5 des öffentlichen Fernsprechnetzes und die Möglichkeit, von Teilnehmeranschlüssen mit Zweiton-Mehrfrequenz-Wahl (DTMF) aus Ziffern zurücksenden zu können. Das Netzt selbst vermittelt entsprechend gekennzeichnete Verbindungswünsche prioritär, das heisst, sorgt zum Beispiel trotz hohem Verkehrsaufkommen, Störungen in Vermittlungszentralen und anderer derartiger Unzulänglichkeiten vorrangig für das sichere Zustandekommen einer Verbindung. Die Anlage kann wünschbare Anforderungen vollumfänglich erfüllen, sofern die Kommandoempfangsgerate Endgeräte des diensteintegrierten digitalen Fernmeldenetzes (ISDN) sind und das öffentliche Fernsprechnetz die Ausbaustufe 7 erreicht. Damit steht unter anderem die Möglichkeit zur Verfügung, während eines bestehenden Anrufs anzuklopfen oder gar eine Verbindung mit einem besetzen Teilnehmer herzustellen. Ein weiterer Vorteil beim ISDN ergibt sich aus der Möglichkeit der Anrufweiterschaltung und Anrufumlenkung. All diese Eigenschaften sind auch im digitalen Mobilfunk (GSM, Natel-D) vorhanden. Zur Erhöhung der Zuverlässigkeit können zwei oder mehrere an verschiedenen Orten im Netz angeschlossene Anrufprozessoren zum Einsatz kommen.

Der Anrufprozessor ist in der Lage, Rückbestätigungen zu verlangen und abzuwarten. Das Verfahren sieht daher in einer bevorzugten Ausführungsvariante vor, auf derartige Rückbestätigungen abzustellen und die Meldung erst abzusetzen, wenn von der angerufenen Stelle eine korrekte, gegebenenfalls individuelle Identifikation zurückkommt. Solche Identifikationen sind mit DTMF- oder ISDN-Endgeräten auf einfache Weise möglich. Damit ist die Möglichkeit gegeben, Meldungen selektiv und individuell zu verbreiten. Ferner ist es möglich, eine Bestätigung des Alarmierten darüber einzuholen, dass er innerhalb einer gewissen Zeit an einem vorgesehenen Ort zum Einsatz erscheinen kann.

Durch die Rückmeldung ist es weiter möglich, in der Kommandoausgabestelle laufend nachzuvollziehen, wer den Alarm erhalten bzw. bestätigt hat. Dies ermöglicht, den Kreis der Meldungsempfänger laufend den Verhältnissen anzupassen.

Als Anrufprozessoren können handelsübliche Anrufsimulatoren für die Prüfung von Anschlüssen und Leitungen in der Telefonie verwendet werden.

Im folgenden ist die Erfindung eingehender beschrieben und anhand der einzigen Figur verdeutlicht.

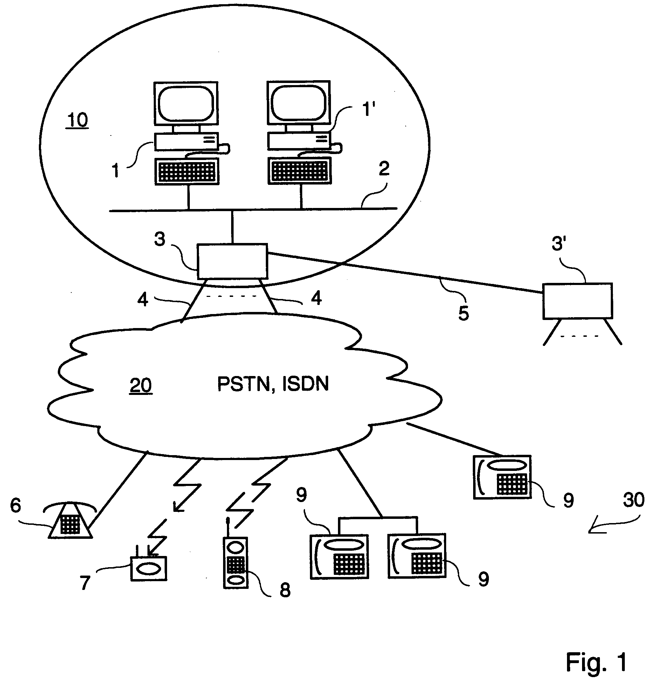

Figur 1 zeigt schematisch die Anordnung der Bestandteile der Alarmierungsanlage.

Die Probleme, die bei einer Alarmierung anstehen, sind im Prinzip immer dieselben. Je nach Ereignis muss die adäquate Zahl von Personen mit adäquaten Qualifikationen rechtzeitig an den geeigneten Ort aufgeboten werden. Deshalb sind entsprechende Dispositive zu erarbeiten. Die Kategorien von Ereignissen werden mit Vorteil katalogisiert. Die für den Einsatz beim Auftreten eines Ereignisses einer bestimmten Kategorie geeigneten Personen werden zum vornherein qualifiziert und vorgemerkt. Weiter wird zugeordnet, wie eine Einsatztruppe für eine bestimmte Kategorie von Ereignissen zahlenmässig und von der Qualifikation her zusammengesezt sein soll. Im Einzelfall eines in einem gewissen Zeitpunkt auftretenden Ereignisses beschränkt sich dann die Entscheidung im wesentlichen auf dessen Einordnung unter eine bestimmte Kategorie; zusammen mit den geographischen Angaben ergibt sich der Kreis der zu alarmierenden Personen in vorgegebener Weise. Dieser Kreis kann je nach Tageszeit unterschiedlich sein. Beispielsweise macht es wenig Sinn, einen Angehörigen der Milizfeuerwehr an seinem über eine Wegstunde entfernten Arbeitsort für einen einfachen Hausbrand an seinem Wohnort zu alarmieren, wohl aber nachts. Die Arbeit der Verwaltung der Dispositive und der Personendaten erfolgt heutzutage mit Hilfe eines Rechners auf effiziente Art und Weise. Die Verwaltung kann vorsehen, dass wichtige Personen der Alarmorganisation jeweils bekanntgeben, wenn sie nicht erreichbar sind. Bei der Bestimmung des Kreises der Mitteilungsempfänger wird diese Nichterreichbarkeit berücksichtigt; sollte während dieser Zeit ein Alarm nötig sein, würde der Rechner automatisch Ersatz auflisten. Der Rechner stellt nach Eingabe der Daten zu einem bestimmten Ereignis - vor allem des Entscheids über dessen Art, die Zeit und die geographischen Angaben - praktisch auf Knopfdruck die Liste der zu alarmierenden Personen zusammen. Selbstverständlich ist es möglich, besonderen Umständen Rechnung zu tragen und von Hand weitere Eingaben zu machen.

Ein anderer Teil des Problems der Alarmierung ist die Erreichbarkeit der zu Alarmierenden innert nützlicher Frist. Meist ist eine sofortige Verbreitung der Meldung ein unabdingbares Erfordernis. Umgekehrt sollte die Einsatzleitung raschmöglichst erfahren können, ob ein Meldungsempfänger erstens die Meldung erhalten und verstanden hat und zweitens den Einsatz leisten kann. Gegebenenfalls ist es ihr dann möglich, den zu alarmierenden Personenkreis zu erweitern bzw. zu vervollständigen. Hier setzt die vorliegende Erfindung an. Sie sieht eine Alarmierungsanlage derart vor, dass eine Vielzahl von Meldungen innert kürzester Zeit individuell abgesetzt werden können, also zwar möglichst gleichzeitig, den Gegebenheiten angepasst aber unabhängig voneinander und zeitlich überlappend. Ferner ist die Anlage in der Lage, individuell verschiedene Informationen der Meldungsempfänger entgegenzunehmen, zu verarbeiten und in geeigneter Weise anzuzeigen, so dass die Einsatzleitung laufend über den Erfolg der Alarmierung orientiert ist. In einer erweiterten Ausführungsform des Verfahrens zur Alarmierung passt die Anlage selber den Kreis der Meldungsempfänger an, wenn die Rückmeldungen ergeben, dass der notwendige Mannschaftsbestand noch nicht erreicht oder bereits überschritten ist.

Die Figur 1 zeigt eine Kommandoausgabestelle 10, mit zwei Rechnern 1, 1' die über eine Datenleitung 2 miteinander verbunden sind, an der ferner ein Anrufprozessor 3 angeschlossen ist. Der Anrufprozessor 3 ist über eine Vielzahl von Verbindungsleitungen 4 mit dem öffentlichen Fernsprechnetz 20 (PSTN, ISDN) verbunden, ferner über einen separaten Anschluss 5 mit einem abgesetzten, weiteren Anrufprozessor 3', der seinerseits an diesem entfernten Ort an das öffentliche Fernsprechnetz angeschlossen ist (nicht gezeichnet). Als Kommandoempfangsgeräte 30 sind herkömmliche Teilnehmer-Endgeräte des Fernmeldenetzes vorhanden; gezeichnet sind beispielsweise eine Teilnehmerstation mit Zweiton-Multifrequenz-Wahl (DTMF) 6, ein Ortsrufempfänger 7 (sogenannter Pager), ein Teilnehmergerät des Mobilfunks 8 und eine ISDN-Teilnehmerstationen 9. Die Teilnebmerstationen könnten sehr wohl auch über Teilnehmervermittlungsanlagen an das Netz angeschlossen sein. Weitere mögliche Geräte, wie etwa Datenendgeräte, sind nicht explizit dargestellt. Ebenfalls nicht dargestellt ist die Variante eines weiteren Anrufprozessors 3', welcher nicht direkt, aber bei Bedarf über das öffentliche Fernsprechnetz 20 mit dem Anrufprozessor 3 verbunden ist, ferner die Möglichkeit, einen weiteren Rechner ausserhalb der Kommandoausgabestelle 10 zu betreiben und mit dieser zu verbinden.

In der Kommandoausgabestelle 10, zum Beispiel der Notrufzentrale einer Gemeinde oder dem Führungsbunker einer militärischen Einheit, laufen die Mitteilungen zusammen, welche zum Entscheid führen, dass ein Ereignis (einer bestimmten Kategorie) vorliegt und dass ein Alarm auszulösen ist. Derartige Mitteilungen können (nicht gezeichnet) über Telephonanrufe in die Kommandoausgabestelle 10 gelangen, von Notrufsäulen, Feuermeldern oder Sicherungsanlagen stammen usw. Meist wird der Alarm vom zuständigen Kommandanten in der Kommandoausgabestelle 10 ausgelöst, doch stehen auch andere Möglichkeiten offen. So kann zum Beispiel ein Kommandant von auswärts einen Telephonanruf von auswärts an den Rechner 1 in der Kommandoausgabestelle 10 machen, wobei er seine Identifikation und eine Dispositivnummer eingibt, worauf der Rechner 1 selbsttätig den unter dieser Nummer disponierten Alarm auslöst. Oder es ist für gewisse Kategorien von Mitteilungen - z. B. eine Feuermeldung - möglich, diese maschinell zu verarbeiten und den Alarm direkt auszulösen. Die Bestimmung der Meldungsempfänger geschieht in der weiter oben geschilderten Art durch mindestens einen Rechner 1.

Der Rechner 1 in der Kommandoausgabestelle 10 gibt die auszugebende Meldung bzw. die individuell verschiedenen Meldungen und die Angaben über die anzurufenden Endgeräte 6...9, insbesondere deren Anrufnummern und die Art der verlangten Rückbestätigung über die Datenleitung 2 an den Anrufprozessor 3 weiter. Dieser ist über eine Vielzahl von Anschlüssen 4 mit dem öffentlichen Fernsprechnetz 20 verbunden, bevorzugt handelt es sich dabei um einen oder mehr als einen Primäranschluss an das ISDN (Primary Rate Access, PRA; 30 Kanäle, 2 Mbit/s), aber auch Einzelverbindungen sind denkbar. Eine erhöhte Zuverlässigkeit wird durch einen abgesetzten, zweiten Anrufprozessor 3' erzielt, der über eine separate Leitung 5 mit dem ersten verbunden und an einer anderen Stelle an das öffentliche Fernsprechnetz angeschlossen ist (nicht gezeichnet). Eine allfällige Störung beim Netzanschluss wird dadurch überbrückt. Es kann aber je nach Netzkonfiguration auch angezeigt sein, mehrere Anrufprozessoren 3' auf verschieden Zentralen zu verteilen. Soll ein Alarm gleichzeitig eine Vielzahl von Meldungsempfänger erreichen, deren Kommandoempfangsgeräte 30 an verschiedenen Zentralen angeschlossen sind, könnte es geschehen, dass die Zahl der möglichen Verbindungen zwischen den Zentralen ungenügend ist, so dass ein einziger Anrufprozessor 3 von zentraler Stelle aus das Netz überlastet. Wickelt hingegen ein Anrufprozessor 3' die Verbindungen zum Grossteil von der Zentrale aus ab, an welcher das Endgerät 6...9 des jeweiligen Meldungsempfängers angeschlossen ist, entfällt dieser Engpass; es wird lediglich noch eine einzige Interzentralenverbindung vom einen Anrufprozessor 3 zum anderen Anrufprozessor 3' benötigt.

Häufig kommt es vor, dass Meldungsempfänger zwar prinzipiell über das vorgesehene Endgerät erreichbar sind, im Zeitpunkt eines ersten Anrufs aber gerade nicht in dessen Nähe oder, im Fall von Mobilfunkteilnebmern, nicht empfangsbereit sind, sei es weil der Standort ungünstig, sei es weil das Gerät gerade ausgeschaltet ist. Für derartige Fälle ist eine mehrfache Wiederholung des Anrufs in kurzen zeitlichen Abständen sinnvoll, was der Anrufprozessor 3 von sich aus bewerkstelligt. Die weiter oben erwähnte Mitteilung wichtiger Personen der Alarmorganisation über ihre jeweilige Nichterreichbarkeit kann nicht nur an die Bediensteten der Kommandoausgabestelle erfolgen, sondern durch einen Anruf an den Anrufprozessor 3 und Angabe der notwendigen Daten in vorgeschriebener Form, so dass die Nichterreichbarkeit automatisch in den Rechner 1 gelangt.

Mit der beschriebenen Anlage kann zwar zur Zeit mit der herkömmlichen Technik der analogen Vermittlungszentralen die prioritäre Vermittlung eines Alarmanrufs noch nicht sichergestellt werden, das heisst an solchen Zentralen muss entweder weiterhin die bisherige Installation verwendet werden, zum Beispiel eine zweite Amtslinie und ein Umschalter, oder vorläufig auf die Möglichkeit des Prioritätsrufs verzichtet werden. Mit der sogenannten Ausbaustufe 7 des Telephonnetzes wird jedoch sowohl die Prioritätslenkung durch das Netz als auch ein Anklopfen für analoge Anschlüsse möglich sein. Bei ISDN-Anschlüssen steht die Funktion der "Call waiting"-Anzeige zur Verfügung. Bei Ortsrufempfängern kann selbtverständlich nur eine Text-Mitteilung abgesetzt werden, die einen Rückruf verlangt.

Der Anrufprozessor 3 ist fähig, während oder nach dem Verbindungsaufbau einfache Quittiersignale der Gegenstelle in Empfang zu nehmen, diese auszuwerten und die weitere Abwicklung je nach deren Inhalt zu gestalten. Ist die Gegenstelle zum Beispiel eine DTMF-Station 6, verlangt der Anrufprozessor 3 nach zu Stande gekommener Verbindung mittels synthetischer Sprachansage zunächst die Eingabe einer Nummernfolge auf der Tastatur der Station, welche den Meldungsempfänger identifiziert. Der Anrufprozessor 3 ist in der Lage, Zweiton-Mehrfreuqenz-Signale zu erkennen. Stimmt die gesendete Nummernfolge mit den Angaben überein, die zuvor vom Rechner 1 an den Anrufprozessor 3 übergeben wurden, setzt dieser die Meldung ab, protokolliert diesen Vorgang und gibt das Protokoll an den Rechner 1 zurück.

In einer erweiterten Ausführungsform schliesst ein weiterer Schritt an, indem der Anrufprozessor 3 vor dem Abbruch der Verbindung vom Meldungsempfänger eine weitere Quittung verlangt. Durch Eingabe einer weiteren Nummer oder Nummernfolge bestätigt dieser, dass er den erhaltenen Auftrag ausführen wird. Das System kann auch die Möglichkeit vorsehen, den Empfang zwar zu bestätigen, die Auftragsausführung jedoch zu verneinen. Ferner kann eine Wiederholung der Durchsage ausgelöst werden. Der Anrufprozessor 1 protokolliert all diese Vorgänge und meldet sie über die Datenleitung 2 an den oder die Rechner 1, 1' zurück. Der Rechner wertet diese Rapporte ständig aus und bringt das Resultat in geeineter Weise zur Darstellung.

Der Einsatzleiter in der Kommandoausgabestelle 10 ist auf diese Weise laufend darüber orientiert, wie die Meldungen abgesetzt wurden und wie die Aufträge voraussichtlich ausgeführt werden, was ihm ermöglicht, nötigenfalls weitere Massnahmen zu ergreifen. Der Rechner 1 kann aber auch so programmiert werden, dass er auf Grund der erhaltenen Rapporte selbständig den Kreis der Meldungsempfänger anpasst und neue Anweisungen an den Anrufprozessor 3 gibt. Sind zum Beispiel zur grossräumigen Absicherung einer Unfallstelle bereits genügend Bestätigungen von Mitgliedern der Ordnungstruppen eingegangen, wird der Rechner nur dort noch weitere Anrufe einleiten, wo damit zu rechnen ist, dass das betreffende Mitglied schneller im Einsatz sein könnte als seine Kollegen. Ist andererseits nach einem Brandausbruch am frühen Abend damit zu rechnen, dass durch die ganze Nacht hindurch Sicherungs- und Aufräumarbeiten anfallen werden, so wird das System bis in die Nacht hinein laufend die Angehörigen der Milizfeuerwehr anrufen, bis ein genügender Bestand erreicht ist.

## Patentansprüche

1. Alarmierungsanlage mit einer zentralen Kommandoausgabestellte (10), dezentral angeordneten Kommandoempfangsgeräten (30) und einer dazwischenliegenden Uebertragungseinrichtung, dadurch gekennzeichnet, dass in der Kommandoausgabestelle (10) mindestens ein Rechner (1, 1') vorhanden ist, der die Kommandoausgabe steuert, das öffentliche Fernsprechnetz (20) als Uebertragungseinrichtung dient und ein Anrufprozessor (3) einerseits mit dem mindestens einen Rechner (1, 1') und andererseits über eine Vielzahl von Anschlüssen (4) mit dem öffentlichen Fernsprechnetz (20) verbunden ist.

2. Alarmierungsanlage nach Anspruch 1, dadurch gekennzeichnet, dass das öffentliche Fernsprechnetz (20) ein dienstintegriertes digitales Fernmeldenetz (ISDN) einschliesst und die Kommandoempfangsgeräte (30) vornehmlich ISDN-Endgeräte (8, 9) sind.

3. Alarmierungsanlage nach Anspruch 1, dadurch gekennzeichnet, dass das öffentliche Fernsprechnetz (20) Mobilfunk für Wählverbindungen einschliesst und Ortsrufempfänger (7) und Teilnehmerapparate des Mobilfunks (8) als Kommandoempfangsgeräte (30) eingesetzt sind.

4. Alarmierungsanlage nach Anspruch 1, dadurch gekennzeichnet, dass der Anrufprozessor (3) mit einem weiteren Anrufprozessor (3') an einem abgesetzten Standort verbunden ist, der seinerseits über eine Vielzahl von Anschlüssen mit dem öffentlichen Fernsprechnetz verbunden ist.

5. Verfahren zur Alarmierung einer Vielzahl örtlich gestreuter Meldungsempfänger mit einer Alarmierungsanlage gemäss Anspruch 1, dadurch gekennzeichnet, dass mit Hilfe des Rechners (1) in der Kommandoausgabestelle (10) der Kreis der Meldungsempfänger und die Meldung vorfallbezogen bestimmt wird, die Daten dem Anrufprozessor (3) übergeben werden und der Anrufprozessor (3) die Vielzahl von Verbindungen zu den Kommandoempfangsgeräten (30) der Meldungsempfänger je individuell aufbaut, sofern eine Verbindung zu Stande kommt die Meldung absetzt und die Verbindung abbricht, andernfalls den Anrufversuch als erfolglos aufgibt, und einen Rapport über die Verbindungsabwicklung an den Rechner (1) zurückgibt.

6. Verfahren nach Anspruch 5, dadurch gekennzeichnet, dass der Anrufprozessor (3) Quittiermeldungen der Kommandoempfangsgeräte (30) entgegennimmt und in den Rapport über die Verbindungsabwicklung aufnimmt.

7. Verfahren nach Anspruch 6, dadurch gekennzeichnet, dass der Meldungsempfänger eine individuelle Identifikation zurückgibt, die der Anrufprozessor (3) überprüft, bevor er die eigentliche Meldung sendet.

8. Verfahren nach Anspruch 7, dadurch gekennzeichnet, dass der Anrufprozessor (3) dem Meldungsempfänger eine von der Kommandoausgabestelle (10) vorfallbezogen individuell für ihn bestimmte Meldung absetzt.

9. Verfahren nach einem der Ansprüche 5 bis 8, dadurch gekennzeichnet, dass der Rechner (1) die Rapporte laufend auswertet und das Resultat grafisch aufbereitet anzeigt.

10. Verfahren nach einem der Ansprüche 5 bis 8, dadurch gekennzeichnet, dass der Rechner (1) die Rapporte laufend auswertet und den Kreis der Meldungsempfänger sukzessive verändert bis das Resultat der Auswertung vorfallbezogenen Anforderungen entspricht.

11. Verfahren nach Anspruch 5, dadurch gekennzeichnet, dass der Anrufprozessor (3) die integrierten Dienste der Prioritätslenkung oder/und des Prioritätsrufs des öffentlichen Fernsprechnetzes (20) benützt.

12. Verfahren nach Anspruch 5, dadurch gekennzeichnet, dass der Anrufprozessor (3) einen Teil der Daten über die zu tätigenden Anrufe an einen abgesetzten, weiteren Anrufprozessor (3') weitergibt, der seinerseits von seiner Netzanschlussstelle aus die Verbindungen zu den Kommandoempfangsgeräten (30) bewirkt.

13. Verfahren nach Anspruch 5, dadurch gekennzeichnet, dass der Rechner (1) laufend die Daten über die Erreichbarkeit und die Einsatzmöglichkeiten der Meldungsempfänger bereit hält und bei der Bestimmung des Kreises der Meldungsempfänger berücksichtigt.
